# EUROPÄISCHE PATENTSCHRIFT

(11) **EP 1 762 446 B1**
(45) Veröffentlichungstag und Bekanntmachung des Hinweises auf die Patenterteilung: **21.04.2010**
(21) Anmeldenummer: 06017102.2
(22) Anmeldetag: 17.08.2006
(51) Int. Cl.: B60R 25/04, G07C 9/00

(54) **Vorrichtung zum Starten des Motores eines Kraftfahrzeugs**
Device for starting the engine of a vehicle
Dispositif pour demarrer un moteur de vehicule

(30) Priorität: 09.09.2005 DE 102005043232
(43) Veröffentlichungstag der Anmeldung: 14.03.2007
(73) Patentinhaber: Bayerische Motoren Werke Aktiengesellschaft, 80809 München (DE)
(72) Erfinder: Hildebrand, Gert, 81377 München (DE); Schafmeister, Ulrike, 81541 München (DE); Girard, Marc, 80997 München (DE)

(56) Entgegenhaltungen:
- EP-A2- 1 361 324
- WO-A-95/09748
- DE-A1- 10 359 013

## Beschreibung

Die vorliegende Erfindung betrifft eine Vorrichtung zum Starten des Motors eines Kraftfahrzeugs mit einer Authentisierungsvorrichtung, die eine nutzerseitig mitführbare Berechtigungseinheit und eine fahrzeugseitige Berechtigungsprüfvorrichtung mit einer Aufnahme für die Berechtigungseinheit umfasst, und mit einer Auslöseeinheit, welche ein Auslöseelement umfasst, durch dessen Betätigung ein Motorstart auslösbar ist.

Solche Vorrichtungen finden in verschiedenen modernen Kraftfahrzeugen Anwendung. Es wird dabei auf einen konventionellen Zündschlüssel verzichtet. Zur Berechtigungsprüfung wird die Berechtigungseinheit typischerweise zunächst in die Aufnahme der Berechtigungsprüfvorrichtung verbracht, beispielsweise eingeführt. Anschließend wird durch die Betätigung des Auslöseelements der Motorstart ausgelöst. In der Regel ist die Auslöseeinheit oder zumindest das Auslöseelement räumlich getrennt von dieser Aufnahme im Kraftfahrzeug angeordnet. Dadurch wird zum einen eine gesonderte Verkabelung sowohl der Aufnahme als auch des Auslöseelements erforderlich. Zum anderen kann der Bediener nicht in einem kontinuierlichen Bewegungsablauf sowohl die Berechtigungseinheit in ihre Bestimmungsposition verbringen als auch das Auslöseelement betätigen.

Ein Ansatz zur Vermeidung dieser Nachteile ist aus der DE 103 59 013 A1 bekannt. Die Lehre der DE 103 59 013 A1 zielt hauptsächlich auf den Entfall eines separaten fahrzeugseitigen Auslöseelements und die damit verbundene vereinfachte Verkabelung in einem Kraftfahrzeug ab. Statt eines separaten fahrzeugseitigen Auslöseelements schlägt die DE 103 59 013 A1 vor, ein Auslöseelement an einer Berechtigungseinheit vorzusehen oder einen Motorstart durch eine geeignete Positionierung der Berechtigungseinheit auszulösen.

Eine solche Vorrichtung bzw. deren Bedienung wird jedoch nicht von jedem Bediener als vorteilhaft und wünschenswert angesehen. Hierfür bestehen verschiedene Gründe, die im Folgenden erläutert werden.

Ein Motorstart, welcher lediglich durch eine geeignete Positionierung der Berechtigungseinheit ausgelöst wird und nicht etwa eine dedizierte Bedienaktion erfordert, kann versehentlich ausgelöst werden und/oder einen ungeübten Bediener überraschen. Schlimmstenfalls kann durch einen versehentlich ausgelösten oder überraschenden Motorstart - neben einer für den Bediener und eventuelle andere Fahrzeuginsassen unangenehmen Überraschung - Schaden an dem Kraftfahrzeug und/oder der Umgebung des Kraftfahrzeugs entstehen. Viele Benutzer schätzen zudem die Notwendigkeit einer dedizierten Bedienaktion zum Starten des Motors, beispielsweise da die Fahrzeugbedienung dadurch subjektiv für den Bediener besser kontrollierbar ist und Fahrzeugreaktionen für den Bediener nachvollziehbar bleiben.

Der Ausgestaltung eines Auslöseelements gemäß der DE 103 59 013 A1, welches direkt an einer Berechtigungseinheit vorgesehen ist, sind in der Regel wegen des beschränkten Bauraums und der beschränkten Energieversorgung an der nutzerseitig mitführbaren Berechtigungseinheit enge Grenzen gesetzt. Beispielsweise kann ein solches Auslöseelement nur sehr kleine Abmessungen haben. Zudem können Gestaltungsmerkmale nicht ausreichend berücksichtigt werden, welche typischerweise dazu dienen, dem Bediener bei der Betätigung des Auslöseelements ein angenehmes haptisches Empfinden und einen eventuell bewusst oder unbewusst mit diesem haptischen Empfinden verknüpften hochwertigen Fahrzeugeindruck zu vermitteln. Zu solchen Gestaltungsmerkmalen zählen beispielsweise der Stellweg und der mechanische Widerstand bei der Betätigung eines Auslöseelements.

Eine gattungsgemäße Vorrichtung ist aus der WO 95/09748 A bekannt.

Aufgabe der vorliegenden Erfindung ist es, eine Vorrichtung zum Starten des Motors eines Kraftfahrzeugs zu schaffen, welche sich durch eine verbesserte Bedienbarkeit auszeichnet.

Gelöst wird diese Aufgabe durch eine Vorrichtung mit den Merkmalen des Anspruchs 1. Varianten, vorteilhafte Ausführungsformen und Weiterbildungen der Erfindung ergeben sich aus den abhängigen Ansprüchen.

Erfindungsgemäß sind das Auslöseelement und die Aufnahme mechanisch derart miteinander verbunden, dass das Auslöseelement betätigbar ist, indem die in die Aufnahme verbrachte Berechtigungseinheit im Wesentlichen translatorisch verschoben wird.

Der Bediener kann somit in einem kontinuierlichen Bewegungsablauf zunächst die Berechtigungseinheit in die Aufnahme verbringen und anschließend das Auslöseelement betätigen, indem er beispielsweise mit einem oder mehreren Fingern auf bzw. gegen die Berechtigungseinheit drückt und diese somit im Wesentlichen translatorisch verschiebt. Gerade die translatorische Verschiebung, im einfachsten Fall ein "Hineindrücken", der Berechtigungseinheit stellt sich dem Bediener bei entsprechender Gestaltung der Berechtigungseinheit und Ihrer Aufnahme als kontinuierliche Fortsetzung des vorangehenden Verbringens der Berechtigungseinheit in die Aufnahme dar. Die Notwenigkeit eines Drehens hingegen, wie sie etwa bei einem konventionellen Zündschlüssel bzw. Zündschloss vorliegt, würde den kontinuierlichen Bewegungsablauf nach dem Verbringen der Berechtigungseinheit in die Aufnahme unterbrechen.

Ein wesentlicher Vorteil der Erfindung liegt darin, dass ein solcher kontinuierlicher Bewegungsablauf ermöglicht wird. Der Bediener hat jedoch auch die Möglichkeit, den Bewegungsablauf zwischen dem Verbringen der Berechtigungseinheit in die Aufnahme und der translatorischen Verschiebung zu unterbrechen. Zudem kann durch gezielte technische Zusatzmaßnahmen eine zumindest kurzzeitige Unterbrechung erzwungen und so ein versehentlicher Motorstart vermieden werden.

Vorzugsweise erfolgt das translatorische Verschieben der Berechtigungseinheit zum Betätigen des Auslöseelements im Wesentlichen in der Richtung, in der die Berechtigungseinheit zuvor in die Aufnahme verbracht wurde. Der für beide Schritte erforderliche Bewegungsablauf stellt sich dem Bediener dann als besonders kontinuierlich dar und fällt ihm dementsprechend leicht.

Gemäß einer bevorzugten Ausführungsform der vorliegenden Erfindung ist die Aufnahme für die Berechtigungseinheit derart an dem Auslöseelement angebracht, dass mit in die Aufnahme verbrachter Berechtigungseinheit zum Betätigen des Auslöseelements ausschließlich eine Handhabung der Berechtigungseinheit erforderlich ist. Unter der Handhabung eines Gegenstands ist dabei im Sinne der Erfindung die Berührung des Gegenstands und/oder die unmittelbare Beaufschlagung mit Kräften und/oder Momenten zu verstehen. Der Bediener muss dann außer der Berechtigungseinheit keine anderen Komponenten anfassen oder in irgendeiner Weise betätigen.

Beispielsweise kann das Auslöseelement als Unterteil eines Bedienelements, insbesondere eines Druckknopfes, ausgebildet sein. Die Berechtigungseinheit kann dann, beispielsweise durch eine Magnetverbindung oder eine lösbare Schnappverbindung, derart an dem Auslöseelement anbringbar sein und derart ausgebildet sein, dass sie geeignet ist, als Oberteil des Bedienelements zu fungieren. Der Bediener kann dann das Oberteil auf das Unterteil aufsetzen und den Motorstart auslösen, indem er das aus Oberteil und Unterteil zusammengesetzte Bedienelement betätigt. Durch die Betätigung des zusammengesetzten Bedienelements wird automatisch das Auslöseelement betätigt. Bei der Betätigung wird typischerweise lediglich das Oberteil des Bedienelements, also die Berechtigungseinheit, vom Bediener gehandhabt, d. h. berührt und unmittelbar mit Kräften und/oder Momenten beaufschlagt.

Die Berechtigungseinheit kann also insbesondere selbst einen wesentlichen Teil eines zum Betätigen des Auslöseelements gedrückten Druckknopfes darstellen. Dieser wesentliche Teil des Druckknopfes kann der Auslöseeinheit zunächst fehlen, wird dann in Gestalt der Berechtigungseinheit hinzugefügt und schließlich zum Betätigen des Auslöseelements gedrückt.

Der Bediener hat verschiedene Möglichkeiten, eine solche Vorrichtung zu bedienen. Besonders vorteilhafterweise kann er die Berechtigungseinheit, nachdem er diese in die Aufnahme verbracht hat, weiter im Griff, beispielsweise zwischen Daumen und Zeigefinger, behalten und dann als Fortsetzung einer kontinuierlichen Bewegung das Auslöseelement betätigen. Der Bediener muss seinen Griff um die Berechtigungseinheit also nicht notwendigerweise lösen, um nach dem Verbringen der Berechtigungseinheit in ihre Aufnahme den Motorstart auszulösen.

Alternativ kann der Bediener aber auch zunächst die Berechtigungseinheit in ihre Aufnahme am Auslöseelement verbringen, wodurch ein neues aus Berechtigungseinheit und Auslöseelement zusammengesetztes Bedienelement entsteht, und seine Bewegung dann bewusst unterbrechen oder abbrechen. Der Bediener kann dann später den Motorstart auslösen, indem er das aus Berechtigungseinheit und Auslöseelement zusammengesetzte Bedienelement betätigt.

Der Verkabelungsaufwand kann bei der vorliegenden Erfindung gering gehalten werden, da beispielsweise das Auslöseelement zusammen mit der daran angeordneten Aufnahme so ausgeführt werden kann, dass beide über eine einzige mehradrige Verbindungsstelle an den Kabelbaum des Kraftfahrzeugs anschließbar sind.

Da das Auslöseelement fahrzeugseitig vorgesehen ist, besteht für den Fahrzeugentwickler für dessen Ausgestaltung grundsätzlich die volle aus dem Stand der Technik bekannte Gestaltungsfreiheit für Bedienelemente. Für eine vorteilhafte Umsetzung der vorliegenden Erfindung ist lediglich zusätzlich zu beachten, dass die Berechtigungseinheit mit ausreichender Festigkeit an dem Auslöseelement anbringbar sein sollte, da die Betätigung des Auslöseelements durch Handhabung der Berechtigungseinheit erfolgen soll und der dabei erzeugte mechanische Druck auf das Auslöseelement übertragen werden muss, um dieses zu betätigen.

Durch die erfindungsgemäß gewonnene bzw. erhaltene Gestaltungsfreiheit ist es beispielsweise möglich, dem Bediener bei der Betätigung des Auslöseelements bzw. des aus Berechtigungseinheit und Auslöseelement zusammengesetzten Bedienelements ein angenehmes haptisches Empfinden und einen eventuell bewusst oder unbewusst mit diesem haptischen Empfinden verknüpften hochwertigen Fahrzeugeindruck zu vermitteln. Hierzu kann beispielsweise der Stellweg und der mechanische Widerstand bei der Betätigung eines als Druckknopf ausgeführten Auslöselements gemäß aus dem Stand der Technik bekannter Methoden geeignet dimensioniert werden.

Die Betätigung des Auslöseelements erfolgt gemäß solcher Ausführungsformen der vorliegenden Erfindung vorzugsweise gegen einen mechanischen Widerstand. Unter einem mechanischen Widerstand ist dabei auch und insbesondere ein über die Betätigungszeit und/oder den Stellweg variabler mechanischer Widerstand zu verstehen. Auch eine aktive haptische Rückkopplung an den Bediener durch die hierzu aus dem Stand der Technik bekannten Methoden ist als Weiterbildung der Erfindung realisierbar.

Vorzugsweise weist die erfindungsgemäße Vorrichtung Mittel zur Erkennung der Anwesenheit der Berechtigungseinheit in der Aufnahme auf. Solche Mittel sind fahrzeugseitig, insbesondere bei der fahrzeugseitigen Berechtigungsprüfvorrichtung, und/oder bei der Berechtigungseinheit vorzusehen. Die Tatsache, dass die Berechtigungseinheit in die Aufnahme verbracht wurde, wird somit für das Kraftfahrzeug und gegebenenfalls dessen informationsverarbeitende Komponenten erkennbar.

Vorzugsweise ist durch die Anwesenheit der Berechtigungseinheit in der Aufnahme der Berechtigungsprüfvorrichtung bzw. durch die fahrzeugseitige Erkennung dieser Anwesenheit eine Berechtigungsprüfung auslösbar. Eine solche Berechtigungsprüfung kann in an sich bekannter Weise erfolgen. Durch eine erfolgreiche Berechtigungsprüfung kann fahrzeugseitig ein Zustandsübergang ausgelöst werden. Beispielsweise kann an eine Fahrzeugklemme eine Zündspannung angelegt werden und/oder es kann ein Lichteffekt ausgelöst werden und/oder es kann eine Informationsausgabe an den Bediener erfolgen.

Eine solche Berechtigungsprüfung kann in ebenfalls, beispielsweise von so genannten "keyless go"-Systemen, bekannter Weise alternativ auch bereits vorab erfolgen. Das Verbringen der Berechtigungseinheit in die Aufnahme der Berechtigungsprüfvorrichtung kann dann jedoch eine weitere Berechtigungsprüfung auslösen. Auch bei erfolgreichem Abschluss dieser zweiten Berechtigungsprüfung kann fahrzeugseitig ein Zustandsübergang ausgelöst werden.

Alternativ oder zusätzlich kann das Verbringen der Berechtigungseinheit in die Aufnahme der Berechtigungsprüfvorrichtung einen fahrzeugseitigen Zustandsübergang, gegebenenfalls sogar einen Motorstart, auslösen, ohne dass eine tatsächliche Berechtigungsprüfung erfolgt. Obwohl dann nicht notwendigerweise eine Berechtigungsprüfung erfolgt, sei zu Gunsten einer prägnanten Ausdrucksweise auch dieser Fall unter den in den Ansprüchen verwendeten Begrifflichkeiten "Authentisierungsvorrichtung", "Berechtigungseinheit" und "Berechtigungsprüfvorrichtung" subsumierbar.

Zur Erkennung der Anwesenheit der Berechtigungseinheit in der Aufnahme können die Berechtigungseinheit und die Aufnahme beispielsweise so ausgeführt sein, dass durch die Anwesenheit der Berechtigungseinheit in der Aufnahme ein Schalter geschlossen wird. Dabei sind verschiedenste Varianten denkbar. Etwa kann die Berechtigungseinheit einen Magneten enthalten, durch dessen Anwesenheit ein Reed-Schalter geschlossen wird und/oder die Berechtigungseinheit kann eine zumindest teilweise elektrisch leitfähige Oberfläche aufweisen, über welche beim Einsetzen in die Aufnahme ein elektrischer Kontakt geschlossen wird.

Ein fahrzeugseitiger Zustandsübergang, welcher durch das Verbringen der Berechtigungseinheit in die Aufnahme ausgelöst wird, kann insbesondere darin bestehen, das Auslöseelement hinsichtlich der tatsächlichen Eignung zur Auslösung eines Motorstarts freizugeben. Vorzugsweise ist ein Motorstart erst dann durch eine Betätigung des Auslöseelements auslösbar, wenn die Berechtigungseinheit in die Aufnahme verbracht ist und gegebenenfalls eine entsprechende Berechtigungsprüfung erfolgreich abgeschlossen ist.

Die Aufnahme weist vorzugsweise eine Ausnehmung auf, in welche die Berechtigungseinheit zunächst eingeschoben oder eingelegt und anschließend, zum Auslösen des Motorstarts, noch weiter eingeschoben und/oder eingedrückt wird. Die Ausnehmung kann beispielsweise muldenförmig ausgestaltet sein. Eine im wesentlichen oval oder kugelförmig geformte Berechtigungseinheit kann dann besonders einfach vom Bediener in die entsprechende - etwa halboval- oder halbkugelförmige - Mulde eingelegt werden. Bei im Wesentlichen waagrechter Anordnung der Aufnahme, etwa in der Mittelkonsole, wird die Berechtigungseinheit auch nicht aus einer solchen Mulde herausrollen oder -rutschen.

Alternativ oder zusätzlich können Auslöseelement und Berechtigungseinheit so gestaltet sein, dass die Berechtigungseinheit so auf das Auslöseelement aufgesteckt oder aufgesetzt werden kann, dass sie dort auch ohne ein weiteres Festhalten des Bedieners verbleibt.

Gemäß einer ersten Weiterbildung der vorliegenden Erfindung ist das Auslöseelement erst dann betätigbar, wenn die Berechtigungseinheit in der Aufnahme anwesend ist und gegebenenfalls eine entsprechende Berechtigungsprüfung erfolgreich abgeschlossen ist. Das Auslöseelement kann dazu mechanisch verriegelbar ausgeführt sein. Zur Verriegelung kann beispielsweise entweder ein Verriegelungsstift in das Auslöselement senkrecht zu dessen Bewegungsrichtung eingeschoben werden oder ein als Auslöseelement fungierender Druckknopf mit aktiver Kraftrückkopplung kann derart ausgebildet sein und derart gesteuert werden, dass der Bediener diesen nicht oder nur mit sehr hohem Kraftaufwand herunterdrücken kann. Eine solche Verriegelung wird vorzugsweise aufrechterhalten, solange die Berechtigungseinheit nicht in die Aufnahme verbracht ist und gegebenenfalls eine entsprechende Berechtigungsprüfung erfolgreich abgeschlossen ist.

Eine solche Weiterbildung wird erst durch die Erfindung möglich, da ein hierzu erforderliches verriegelbares Auslöseelement eine gerätetechnisch aufwändige Gestaltung erfordert und beispielsweise nicht an einer nutzerseitig mitzuführenden Berechtigungseinheit gemäß der DE 103 59 013 A1 angeordnet werden könnte.

Gemäß einer zweiten Weiterbildung der vorliegenden Erfindung sind Individualdaten zumindest eines Bedieners in der Berechtigungseinheit speicherbar und von der Berechtigungseinheit an das Kraftfahrzeug übertragbar. Zum einen können dadurch sämtliche aus dem Stand der Technik bekannten Verfahren zur Personalisierung und Individualisierung eines Kraftfahrzeugs über eine Berechtigungseinheit Anwendung finden. Diese umfassen sowohl den Transfer von Individualdaten zwischen mehreren Kraftfahrzeugen als auch die vom Kraftfahrzeug losgelöste Erzeugung von Individualdaten, etwa am heimischen PC, und deren Verwendung im Kraftfahrzeug. Denkbar sind beispielsweise die Speicherung bzw. der Transfer von Sitzeinstellungen, Beifahrerkonfigurationen, Fahrzeugkonfigurationen, Musikstücken, Hilfs- und Unterhaltungsprogrammen wie etwa MP3-Playern, Rundfunkfrequenzen, Telefonnummern, Programmierungen eines multifunktionalen Bediensystems, Navigationsadressen, Moodszenarien, einer Garagenöffnungsfunktion, mautbezogenen Daten, Tankrechnungen und/oder Verbrauchsmessungen. Die Bererechtigungseinheit kann dabei so ausgeführt sein, dass sie bei Verfügbarkeit einer geeigneten Gegenstelle zur Kommunikation und zum Individualdatentransfer mit verschiedenen Kraftfahrzeugtypen geeignet ist. Auf diese Weise können die in der Berechtigungseinheit abgelegten Individualdaten dem Bediener auch zur Anpassung von Miet-, Zweit- und/oder Drittfahrzegen dienen. Bei entsprechender Zugänglichkeit können solche Daten beispielsweise auch zur Abrechnung/Berechnung von Flottenverbräuchen, Durchschnittsverbräuchen und/oder Kilometerleistungen, zur Erstellung eines automatischen Fahrtenbuchs, zur Mietfahrzeugabrechnung, zur Idealfahrstreckenprogrammierung, zur Adressspeicherung, zu so genannten Scenic Tours, zur Bestellung eines Nachfolgefahrzeugs beim Fahrzeughändler, zur Analyse des Kundenverhaltens, zur Erhebung von Werkstättendaten und/oder zur Fahrzeuggesamtkostenbetrachtung verwendet werden.

Zum anderen können solche Individualdaten im speziellen Zusammenhang mit der vorliegenden Erfindung vorteilhaft genutzt werden. Beispielsweise können Individualdaten dazu genutzt werden, den mechanischen Widerstand, gegen welchen die Betätigung des Auslöseelements erfolgt, abhängig von den Individualdaten anzupassen. Hierzu können Individualdaten von der Berechtigungseinheit zur Auslöseeinheit übertragbar sein.

Zur Kopplung der Berechtigungseinheit an einen PC und/oder eine andere Informationsverarbeitungs- und/oder Konfigurationseinheit kann eine erfindungsgemäße Vorrichtung eine geeignete Kopplungsstation umfassen.

Gemäß der vorliegenden Erfindung weist die Berechtigungseinheit zumindest ein optisches Anzeigeelement auf. Durch ein solches Anzeigeelement können dem Bediener außerhalb des Fahrzeugs bei nutzerseitig mitgeführter Berechtigungseinheit oder auch im Fahrzeuginneren, beispielsweise während des Fahrzeugbetriebs, Informationen zur Anzeige gebracht werden.

Besonders vorteilhaft kann ein solches Anzeigeelement genutzt werden, wenn Fahrzeugdaten von dem Kraftfahrzeug an die Berechtigungseinheit übertragbar sind. Das optische Anzeigeelement der Berechtigungseinheit kann dann zur Anzeige der Fahrzeugdaten dienen.

Das Anzeigeelement kann insbesondere dazu dienen, dem Bediener den aktuellen Zustand des Kraftfahrzeugs und/oder der Berechtigungseinheit sowie gegebenenfalls Informationen zur im aktuellen Zustand zutreffenden Verwendbarkeit der Berechtigungseinheit zu visualisieren.

Das optische Anzeigeelement zeigt, einem Bediener die Bereitschaft des Kraftfahrzeugs zum Auslösen des Motorstarts an. Beispielsweise kann das Anzeigeelement nach dem Verbringen der Berechtigungseinheit in ihre Aufnahme eine grafische, symbolische oder textuelle Anzeige ausgeben, welche dem Bediener die Bereitschaft des Kraftfahrzeugs zum Auslösen des Motorstarts verdeutlicht und gegebenenfalls weitere Hinweise gibt.

Beispielsweise kann bei einer Ausführungsform der Erfindung, bei welcher die Berechtigungseinheit und das Auslöseelement gemeinsam ein zusammengesetztes Bedienelement bilden, nach dem Verbringen der Berechtigungseinheit in ihre Aufnahme die Anzeige "PUSH TO START" erscheinen. Dem Bediener wird dadurch verdeutlicht, dass er durch einen Druck auf die Berechtigungseinheit in der aktuellen Situation einen Motorstart auslösen kann.

Während des Fahrzeugbetriebs kann das Anzeigeelement der Berechtigungseinheit zur Anzeige ausgewählter Fahrzeugdaten dienen, welche gemäß dem Stand der Technik typischerweise im Instrumentenkombi oder an anderer Stelle im Kraftfahrzeug zur Anzeige gebracht werden. Auf diese Weise kann die Informationsdichte im Instrumentenkombi oder an anderer Stelle im Kraftfahrzeug entzerrt werden.

Das Anzeigeelement der Berechtigungseinheit kann also in verschiedenen Phasen der Fahrzeugnutzung, insbesondere während des eigentlichen Fahrzeugbetriebs (z.B. bei laufendem Motor) und auch während einer vorbereitenden Phase (Berechtigungseinheit in Aufnahme, jedoch Auslöseelement noch nicht betätigt), zur Anzeige ausgewählter Fahrzeugdaten dienen.

Außerhalb des Kraftfahrzeugs kann das Anzeigeelement beispielsweise Zeitinformation wiedergeben, etwa eine Uhrzeit oder eine verbleibende Parkberechtigungsdauer.

Generell ist es - auch bei von der Erfindung abweichenden Ausführungsformen - vorteilhaft, wenn bei einer Vorrichtung der eingangs genannten Gattung das Auslöseelement und die Aufnahme für die Berechtigungseinheit fahrzeugseitig derart angeordnet sind, dass das Auslöseelement ohne Umgreifen durch eine die Berechtigungseinheit in die Aufnahme verbringende Hand eines Bedieners bedienbar ist. Unter einem Umgreifen wäre dabei insbesondere ein vollständiges oder teilweises Loslassen und ein darauf folgendes neues Zugreifen zu verstehen. Wenn ein solches Umgreifen vermieden wird, können ein Verbringen der Berechtigungseinheit in ihre Bestimmungsposition und eine zum Auslösen des Motorstarts erforderliche Bedienaktion in einem kontinuierlichen Bewegungsablauf des Bedieners erfolgen. Die Bedienbarkeit der Vorrichtung zum Starten des Motors wird somit gegenüber dem Stand der Technik verbessert. Gemäß einer alternativ zur Erfindung denkbaren Vorrichtung der eingangs genannten Gattung kann das Auslöseelement grundsätzlich auch mit nicht verschwindendem Abstand versetzt bezüglich der Aufnahme für die Berechtigungseinheit angeordnet werden. Der Abstand ist dann jedoch sehr gering, vorzugsweise im Bereich weniger Zentimeter, zu halten und die Richtung des Versatzes so zu wählen, dass das Auslöseelement durch einen Bediener bequem bedienbar ist, während die Hand des Bedieners die Berechtigungseinheit in einer Art und Weise greift, welche zum Verbringen der Berechtigungseinheit in die Aufnahme geeignet ist. Vorzugsweise werden der Abstand und die Richtung des Versatzes so gewählt, dass der Bediener die im Wesentlichen zwischen Zeigefinger und Daumen gehaltene Berechtigungseinheit in die Aufnahme verbringen und problemlos ohne Umgreifen, d. h. im gleichen kontinuierlichen Bewegungsablauf mit dem kleinen Finger, dem Ringfinger und/oder dem Mittelfinger derselben Hand das Auslöselement betätigen kann. Der Abstand ist bei einer solchen alternativ denkbaren Vorrichtung dementsprechend kleiner oder gleich dem Aktionsradius zu wählen, der für den kleinen Finger, den Ringfinger und/oder den Mittelfinger einer Hand eines typischen Bedieners verbleibt, wenn dieser die Berechtigungseinheit im Wesentlichen zwischen Zeigefinger und Daumen derselben Hand hält. Für die Festlegung der Richtung des Versatzes ist entscheidend, in welcher Raumlage die Berechtigungseinheit typischerweise vom Bediener gegriffen wird. Falls die Berechtigungseinheit beim Verbringen in die Aufnahme typischerweise im Obergriff, d. h. mit dem Daumen von unten und dem Zeigefinger von oben, gegriffen wird, ist das Auslöseelement bezüglich der Aufnahme aus Sicht des Bedieners vorzugsweise im Wesentlichen rechts, gegebenenfalls leicht nach oben versetzt, anzuordnen. Falls die Berechtigungseinheit typischerweise im Seitgriff, d. h. mit dem Daumen von links und dem Zeigefinger von rechts, gegriffen wird, ist das Auslöseelement bezüglich der Aufnahme aus Sicht des Bedieners vorzugsweise im Wesentlichen oberhalb, gegebenenfalls leicht nach rechts versetzt, anzuordnen. Die obige Beschreibung bezieht sich auf eine Ausführung zur Bedienung mit der rechten Hand des Bedieners. Eine Ausführung zur Bedienung mit der linken Hand des Bedieners kann durch analoge Überlegungen spiegelverkehrt gestaltet werden. Die vom Bediener favorisierte Raumlage beim Greifen der Berechtigungseinheit hängt stark von der Formgestaltung der Berechtigungseinheit und von der Anordnung der Aufnahme im Kraftfahrzeug ab. Sie ist durch diese Gestaltungs-Charakteristika somit gezielt beeinflussbar. Ebenso kann der Dimensionierung des Abstands und der Richtung des Versatzes die Überlegung zugrundegelegt werden, dass der Bediener die Berechtigungseinheit im Wesentlichen zwischen Mittelfinger und Daumen derselben Hand hält. Für den Abstand zwischen Aufnahme und Auslöseelement wird dann als Obergrenze der Aktionsradius verwendet, der für den Zeigefinger einer Hand eines typischen Bedieners verbleibt, wenn dieser die Berechtigungseinheit im Wesentlichen zwischen Mittelfinger und Daumen derselben Hand hält. Auch beim Griff zwischen Mittelfinger und Daumen ist für die Festlegung der Richtung des Versatzes zwischen Aufnahme und Auslöseelement entscheidend, in welcher Raumlage die Berechtigungseinheit typischerweise vom Bediener gegriffen wird. Falls die Berechtigungseinheit beim Verbringen in die Aufnahme im Obergriff gehalten werden soll, d. h. mit dem Daumen von unten und dem Mittelfinger von oben, ist das Auslöseelement bezüglich der Aufnahme aus Sicht des Bedieners vorzugsweise im Wesentlichen links, gegebenenfalls leicht nach oben versetzt, anzuordnen. Falls die Berechtigungseinheit typischerweise im Seitgriff, d. h. mit dem Daumen von links und dem Mittelfinger von rechts, gegriffen wird, ist das Auslöseelement bezüglich der Aufnahme aus Sicht des Bedieners vorzugsweise im Wesentlichen oberhalb anzuordnen. Für ein Verbringen der Berechtigungseinheit in die Aufnahme im Untergriff, d. h. mit dem Daumen von oben und dem Mittelfinger von unten, ist das Auslöseelement bezüglich der Aufnahme aus Sicht des Bedieners vorzugsweise im Wesentlichen rechts, gegebenenfalls leicht nach unten versetzt, anzuordnen. Die obige Beschreibung bezieht sich wiederum auf eine Ausführung zur Bedienung mit der rechten Hand des Bedieners. Eine Ausführung zur Bedienung mit der linken Hand des Bedieners kann auch hier durch analoge Überlegungen spiegelverkehrt gestaltet werden. Bei einer solchen alternativ denkbaren Vorrichtung können die Aufnahme für die Berechtigungseinheit und das Auslöseelement an einer gemeinsamen in eine Instrumententafel oder die Mittelkonsole des Kraftfahrzeugs integrierten Bedienkomponente angeordnet sein. Der Verkabelungsaufwand kann dann gering gehalten werden. Beispielsweise kann die Bedienkomponente in einem solchen Fall so ausgeführt werden, dass sie über eine einzige mehradrige Verbindungsstelle an den Kabelbaum des Kraftfahrzeugs anschließbar ist.

Anhand der beigefügten Zeichnungen wird die Erfindung weiter erläutert. Dabei zeigen schematisch
- Fig. 1: eine perspektivische Ansicht einer Vorrichtung mit getrennt von der Aufnahme angeordnetem Auslöseelement,
- Fig. 2a: eine erste Schnittansicht einer Vorrichtung gemäß einer bevorzugten Ausführungsform der vorliegenden Erfindung,
- Fig. 2b: eine zweite Schnittansicht derselben Vorrichtung,
- Fig. 2c: eine dritte Schnittansicht derselben Vorrichtung,
- Fig. 3: eine bevorzugte Ausführungsform einer Berechtigungseinheit als Teil einer erfindungsgemäßen Vorrichtung und
- Fig.4: dieselbe Berechtigungseinheit zusammen mit einer bevorzugten Ausführungsform einer Kopplungsstation für eine solche Berechtigungseinheit.

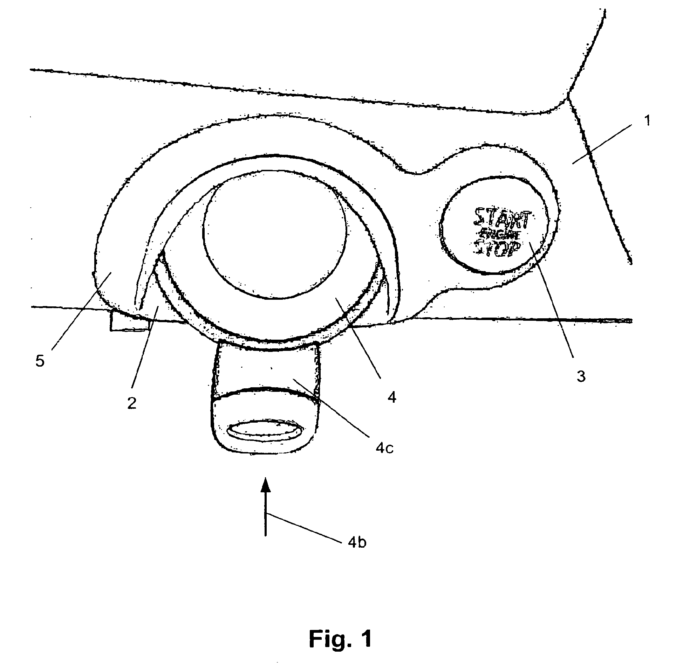

Zunächst wird eine Vorrichtung mit getrennt von der Aufnahme angeordnetem Auslöseelement beschrieben. Fig. 1 zeigt eine perspektivische Ansicht der Vorrichtung. Die Vorrichtung umfasst eine Authentisierungsvorrichtung und eine Auslöseeinheit. Die Authentisierungsvorrichtung besteht im Wesentlichen aus einer nutzerseitig mitführbaren Berechtigungseinheit 4 und einer fahrzeugseitigen Berechtigungsprüfvorrichtung 5. Im vorliegenden Beispiel ist die Berechtigungsprüfvorrichtung 5 als Bedienkomponente in eine Instrumententafel 1 des Kraftfahrzeugs integriert. Die Berechtigungsprüfvorrichtung 5 weist eine Ausnehmung 2 zur Aufnahme der Berechtigungseinheit 4 auf. Die Berechtigungseinheit 4 kann von einem Bediener in Richtung des Pfeils 4b in die Ausnehmung 2 eingeschoben werden und rastet dort mittels nicht eigens grafisch dargestellter Haltemittel ein.

Zum vereinfachten Greifen der Berechtigungseinheit 4 und gegebenenfalls zum Anbringen eines Schlüsselanhängers kann einem Bediener der Fortsatz 4c der Berechtigungseinheit 4 dienen. Der Fortsatz 4c kann ferner eine Antenne der Berechtigungseinheit 4 zumindest teilweise aufnehmen.

Sobald die Berechtigungseinheit 4 bis zu einem für den Bediener spürbaren Einrasten in die Ausnehmung 2 eingeschoben ist, wird fahrzeugseitig ein Authentisierungsvorgang gestartet. Bei diesem wird im Wesentlichen ein Berechtigungscode der Berechtigungseinheit 4 abgefragt. Der Berechtigungscode ist in einer hier nicht eigens grafisch dargestellten Speichereinheit der Berechtigungseinheit 4 abgelegt.

Die Auslöseeinheit umfasst im Wesentlichen den als Auslöseelement dienenden Druckknopf 3. Zudem umfasst die Auslöseeinheit Mittel zur Weiterleitung eines Auslösesignals an die Motorsteuerung des Kraftfahrzeugs. Nach erfolgter und erfolgreicher Authentisierung ist durch eine Betätigung des Druckknopfes 3 ein Motorstart auslösbar.

Der Druckknopf 3 ist im vorliegenden Beispiel an der Berechtigungsprüfvorrichtung 5 angeordnet. Die Ausnehmung 2 zur Aufnahme der Berechtigungseinheit 4 und der Druckknopf 3 sind somit an einer gemeinsamen Bedienkomponente, hier der Berechtigungsprüfvorrichtung 5 selbst, angeordnet. Die elektrischen Anschlüsse des Druckknopfes 3 sind mit denen der Berechtigungsprüfvorrichtung 5 in einem mehradrigen Verbindungsstecker zusammengefasst. Die fahrzeugseitige Verkabelung gestaltet sich dementsprechend einfach.

Sowohl die zur Aufnahme der Berechtigungseinheit 4 vorgesehene Ausnehmung 2 als auch der Druckknopf 3 sind fahrzeugseitig angeordnet. Insbesondere die fahrzeugseitige Anordnung des Druckknopfes 3 erlaubt es, diesen voluminös zu gestalten und ihn mit einem beleuchteten Anzeigeelement zu versehen. Zudem erlaubt es die fahrzeugseitige Anordnung des Druckknopfes 3, diesen derart zu gestalten, dass zu seiner Betätigung, d. h. zum faktischen Auslösen des Motorstarts, ein Stellweg von mehreren Millimetern erforderlich ist und dass der Bediener bei der Betätigung einen mechanischen Widerstand erfährt, den er subjektiv als hochwertig empfindet. Die zur Betätigung erforderliche Druckkraft variiert im vorliegenden Beispiel abhängig vom bereits zurückgelegten Stellweg und beträgt im Maximum mehr als 1 N.

Die zur Aufnahme der Berechtigungseinheit 4 vorgesehene Ausnehmung 2 und der Druckknopf 3 sind zwar einige Zentimeter voneinander beabstandet, jedoch in ausreichender Nähe zueinander angeordnet, dass der Bediener in einem kontinuierlichen Bewegungsablauf die Berechtigungseinheit 4 in die Ausnehmung 2 einschieben und den Druckknopf 3 betätigen kann. Besonders einfach kann dies erfolgen, indem der Bediener die Berechtigungseinheit 4 zum Einschieben im Wesentlichen am Fortsatz 4c zwischen Mittelfinger und Daumen der rechten Hand greift und den Druckknopf 3 nach dem Einschieben mit dem Zeigefinger 4 derselben Hand betätigt. Zum Greifen der Berechtigungseinheit 4 verwendet der Bediener dabei vorzugsweise einen so genannten Untergriff, bei welchem er den Daumen von oben und die zum Zeigefinger weisende Flanke des Mittelfingers von unten an die Berechtigungseinheit 4 legt.

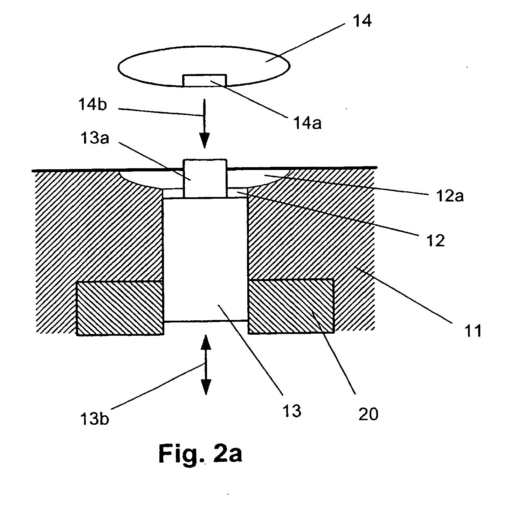

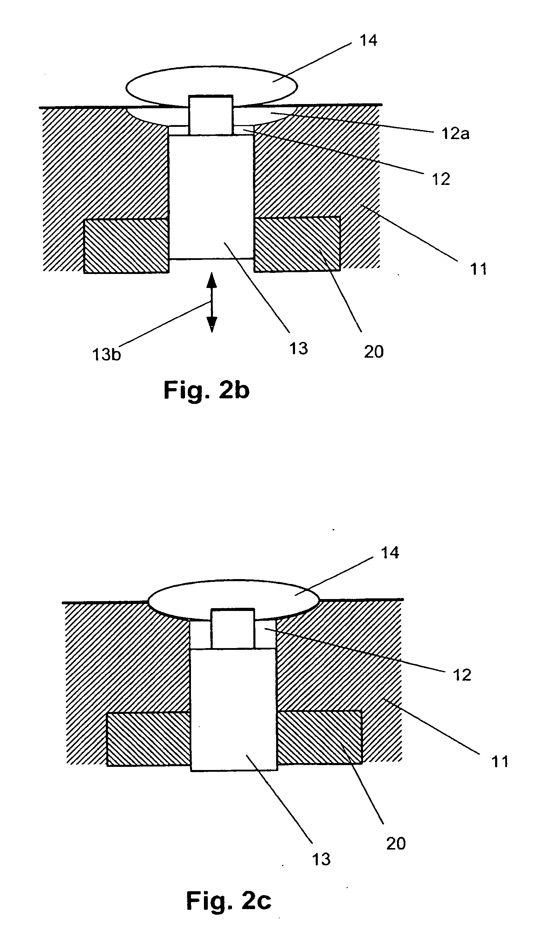

Die Zeichnungen Fig. 2a, Fig. 2b und Fig. 2c zeigen Schnittansichten einer Vorrichtung gemäß einer bevorzugten Ausführungsform der vorliegenden Erfindung. Die Schnittansichten beziehen sich jeweils auf dieselbe Schnittebene, jedoch unterschiedliche Zustände der Vorrichtung.

Fig. 2a zeigt die Vorrichtung mit noch nicht in die Aufnahme verbrachter Berechtigungseinheit 14. In Fig. 2b ist die Berechtigungseinheit 14 in ihre Aufnahme verbracht, das Auslöseelement 13 jedoch noch nicht betätigt. In Fig. 2c ist die Berechtigungseinheit 14 in ihre Aufnahme verbracht und das Auslöseelement 13 betätigt.

Die Berechtigungseinheit 14 besitzt an ihrer Unterseite eine Ausnehmung 14a. Mittels derselben ist die Berechtigungseinheit 14 in Richtung des Pfeils 14b auf einen Aufnahmestift 13a des Auslöselements 13 aufsetzbar. Die Aufnahme für die Berechtigungseinheit 14 ist also an dem Auslöseelement 13 angeordnet. Zur definierten Befestigung der Berechtigungseinheit 14 an dem Auslöseelement 13 besteht zwischen Aufnahmestift 13a und Ausnehmung 14a eine grafisch nicht eigens dargestellte lösbare Schnappverbindung.

Das Auslöseelement 13 ist in einer Ausnehmung 12 der Mittelkonsole 11 eines Kraftfahrzeugs gelagert. Dabei ist es prinzipiell entlang der Ausnehmung 12 in der durch den Doppelpfeil 13b angedeuteten Bewegungsrichtung beweglich. Die Ausnehmung 12 mündet an ihrer Oberseite in eine Auswölbung 12a, in welche die Berechtigungseinheit 14 teilweise eintauchen kann, siehe Fig. 2c.

Um dieses Eintauchen zu ermöglichen, ist die Auswölbung 12a im vorliegenden Beispiel muldenförmig und in ihrer Formgebung in etwa der äußeren Form der Berechtigungseinheit 14 angepasst. Auch lässt die Muldenform den Bediener intuitiv erkennen, wohin er die im vorliegenden Beispiel im Wesentlichen ovalförmige Berechtigungseinheit 14 zu verbringen hat. Die aufeinander abgestimmte Formgebung von Auslöseelement 13 und Berechtigungseinheit 14 (Aufnahmestift 13a vs. Ausnehmung 14a) bietet dem Bediener zudem eine Möglichkeit zur insbesondere haptischen Orientierung beim Verbringen der Berechtigungseinheit 14 in die geeignete Position. Beispielsweise wird ein schiefes Einlegen der Berechtigungseinheit 14 in die Mulde 12a so vermieden.

Nach dem Aufsetzen der Berechtigungseinheit 14 auf das Auslöseelement 13 ist die Berechtigungseinheit nur noch in dem einzigen bestehenden (translatorischen) Freiheitsgrad des Auslöseelements 13 beweglich (sh. Doppelpfeil 13b).

Durch das Aufsetzen der Berechtigungseinheit 14 auf das Auslöseelement 13 entsteht faktisch ein neues Bedienelement 13,14. Dieses ist ebenfalls prinzipiell entlang der Ausnehmung 12 in der durch den Doppelpfeil 13b angedeuteten Bewegungsrichtung beweglich.

Die Pfeile 13b und 14b lassen erkennen, dass im vorliegenden Beispiel die Berechtigungseinheit nach dem Aufsetzen (Pfeil 14b) im Wesentlichen in derselben Richtung (hier sogar genau in derselben Richtung) weiter translatorisch verschoben wird (Pfeil 13b nach unten), um das Auslöseelement zu betätigen und einen Motorstart auszulösen.

Das Aufsetzen der Berechtigungseinheit 14 auf das Auslöseelement 13 ist fahrzeugseitig erkennbar. Zur Erkennung des Aufsetzens der Berechtigungseinheit 14 auf das Auslöseelement 13 dient ein grafisch nicht eigens dargestellter Reed-Schalter, dessen Schaltsignal durch die Steuerung der Auslöseeinheit, zu welcher das Auslöseelement 13 gehört, ausgewertet wird.

Die Auslöseeinheit umfasst ferner einen das Auslöselement 13 umschließenden Aktuator 20. Mittels des Aktuators 20 kann das Auslöselement 13 bzw. das Bedienelement 13,14 in seiner Beweglichkeit in der durch den Doppelpfeil 13b angedeuteten Bewegungsrichtung eingeschränkt werden. Im hier beschriebenen Beispiel ist das Auslöseelement nicht in der durch den Doppelpfeil 13b angedeuteten Bewegungsrichtung beweglich, also verriegelt, solange die Berechtigungseinheit 14 nicht auf das Auslöseelement 13 aufgesetzt ist. Sobald die Berechtigungseinheit 14 auf das Auslöseelement 13 aufgesetzt ist, wird die Verriegelung gelöst. Nach der Entriegelung ist das Bedienelement 13,14 durch einen von oben auf die Berechtigungseinheit 14 ausgeübten Andruck des Bedieners entlang einer in der Steuerung der Auslöseeinheit abgelegten Kraft-Stellweg-Kennlinie beweglich. Die Kraft-Stellweg-Kennlinie ist hinsichtlich einer gewünschten vom Bediener empfundenen Haptik anpassbar.

Zum Auslösen eines Motorstarts muss der Bediener das Bedienelement 13,14 einige Millimeter nach unten drücken. Fig. 2 zeigt das Bedienelement 13,14 in heruntergedrücktem Zustand.

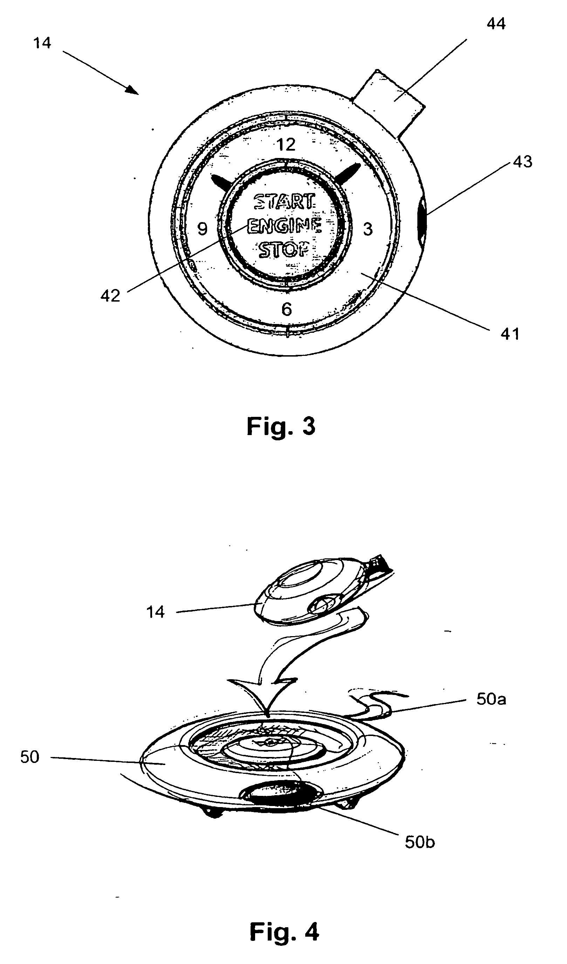

Auf ihrer Oberseite besitzt die im vorliegenden Beispiel oval ausgestaltete Berechtigungseinheit 14 zwei Anzeigeelemente. Fig. 3 zeigt die Berechtigungseinheit 14. Die beiden Anzeigelemente sind ausgebildet als eine Flüssigkristallanzeige 42 und eine um die Flüssigkristallanzeige 42 herum angeordnete Analoguhr 41. Ferner weist die Berechtigungseinheit 14 einen Fortsatz 44 auf. Dieser erleichtert einem Bediener das Greifen der Berechtigungseinheit 14 und kann als Antenne fungieren.

Die Analoguhr 41 zeigt dem Bediener zu jeder Zeit, auch außerhalb des Kraftfahrzeugs, die aktuelle Uhrzeit an. Im auf das Auslöseelement 13 aufgesteckten Zustand der Berechtigungseinheit 14 ist die Analoguhr 41 ebenfalls im Blickfeld des Bedieners. Eine weitere Uhrzeitanzeige im Kraftfahrzeug ist daher nicht erforderlich.

Die Flüssigkristallanzeige 42 zeigt außerhalb des Kraftfahrzeugs eine Grafik an. Diese Grafik ist vom Bediener über eine an späterer Stelle beschriebene Kopplung mit einem PC gestaltbar. Im Kraftfahrzeug gibt die Flüssigkristallanzeige 42 an den Bediener einen grafischen oder textuellen Hinweis, die Berechtigungseinheit 14 auf das Auslöseelement 13 aufzustecken. Nach dem Aufstecken der Berechtigungseinheit 14 auf das Auslöseelement 13 gibt die Flüssigkristallanzeige 42 an den Bediener einen grafischen oder textuellen Hinweis, dass der Motor durch Drücken des Bedienelements 13,14 gestartet oder gestoppt werden kann. Im in Fig. 3 abgebildeten Beispiel wird ein textueller Hinweis "START ENGINE STOP" gegeben.

Beide Anzeigeelemente 41,42 sind an der Berechtigungseinheit 14 hinter einer Kunststoffabdeckung angebracht. Der Bediener kann somit gefahrlos auf die gesamte Oberfläche der Berechtigungseinheit 14 Druck ausüben, ohne diese zu beschädigen.

Zur Kopplung der Berechtigungseinheit 14 an einen PC und/oder eine andere Informationsverarbeitungs- und/oder Konfigurationseinheit umfasst die im vorliegenden Beispiel beschriebene erfindungsgemäße Vorrichtung eine geeignete Kopplungsstation 50.

Zur Herstellung einer solchen Kopplung wird die Berechtigungseinheit 14 an die Kopplungsstation 50 angenähert oder in diese eingebracht. Im vorliegenden Beispiel besitzt die Kopplungsstation 50 ein Haltenetz, in welches die Berechtigungseinheit 14 gemäß Fig. 4 eingelegt werden kann. Die Kopplungsstation 50 ist über eine Anschlussleitung 50a mit Energie versorgbar und mit einen PC verbindbar. Ebenso kann die Verbindung mit dem PC drahtlos hergestellt werden.

Sowohl die Berechtigungseinheit 14 als auch die Kopplungsstation 50 besitzen Mittel zur drahtlosen Kommunikation untereinander. Die Kommunikation zwischen Berechtigungseinheit 14 und Kopplungsstation 50 kann beispielsweise unter Verwendung der Infrarot- oder Bluetooth-Technologie erfolgen. Die hierzu jeweils erforderlichen Schnittstellen an Berechtigungseinheit 14 und Kopplungsstation 50 sind in Fig. 3 und Fig. 4 durch die Kopplungselemente 43 und 50b angedeutet.

Die Infrarot- bzw. Bluetooth-Schnittstelle der Berechtigungseinheit 14 ist auch zur Kommunikation mit anderen Kopplungsstationen, insbesondere innerhalb des Kraftfahrzeugs, geeignet.

Die Berechtigungseinheit 14 enthält einen nicht eigens grafisch dargestellten Individualdatenspeicher. Die in diesem Individualdatenspeicher abgelegten Individualdaten eines Bedieners können über die Kopplungsstation 50 von einem PC aus konfiguriert werden. Ferner sind die Individualdaten von der Berechtigungseinheit an das Kraftfahrzeug übertragbar. Die Konfiguration der Auslöseeinheit oder anderer Komponenten des Kraftfahrzeugs ist abhängig von diesen Individualdaten beeinflussbar. Beispielsweise kann die bereits besprochene Kraft-Stellweg-Kennlinie des Bedienelements 13,14 beeinflusst werden.

Nimmt der Bediener während des Kraftfahrzeugbetriebs Veränderungen an der Konfiguration vor so kann die entsprechend veränderte Konfiguration des Kraftfahrzeugs ebenfalls in Form von Individualdaten in den Individualdatenspeicher der Berechtigungseinheit 14 übernommen werden. Ein entsprechender Datentransfer kann beispielsweise beim Motorstop erfolgen.

## Patentansprüche

1. Vorrichtung zum Starten des Motors eines Kraftfahrzeugs mit einer Authentisierungsvorrichtung, die eine nutzerseitig mitführbare Berechtigungseinheit und eine fahrzeugseitige Berechtigungsprüfvorrichtung mit einer Aufnahme für die Berechtigungseinheit umfasst, und mit einer Auslöseeinheit, welche ein Auslöseelement umfasst, durch dessen Betätigung ein Motorstart auslösbar ist,
wobei das Auslöseelement und die Aufnahme mechanisch derart miteinander verbunden sind, dass das Auslöseelement betätigbar ist, indem die in die Aufnahme verbrachte Berechtigungseinheit im Wesentlichen translatorisch verschoben wird,
**dadurch gekennzeichnet,**
**dass** die Berechtigungseinheit zumindest ein optisches Anzeigeelement aufweist, das die Bereitschaft des Kraftfahrzeugs zum Auslösen des Motorstarts anzeigt und
**dass** die Vorrichtung derart ausgebildet ist, dass nach dem Verbringen der Berechtigungseinheit in ihre Aufnahme die Bereitschaft des Kraftfahrzeugs zum Auslösen des Motorstarts durch das Anzeigeelement anzeigbar ist.

2. Vorrichtung nach Anspruch 1, **dadurch gekennzeichnet,**
**dass** die Betätigung des Auslöseelements gegen einen mechanischen Widerstand erfolgt.

3. Vorrichtung nach einem der Ansprüche 1 oder 2, **dadurch gekennzeichnet,**
**dass** die Vorrichtung Mittel zur Erkennung der Anwesenheit der Berechtigungseinheit in der Aufnahme aufweist.

4. Vorrichtung nach einem der Ansprüche 1 bis 3, **dadurch gekennzeichnet,**
**dass** das Auslöseelement erst dann betätigbar ist, wenn die Berechtigungseinheit in der Aufnahme anwesend ist und gegebenenfalls eine entsprechende Berechtigungsprüfung erfolgreich abgeschlossen ist.

5. Vorrichtung nach einem der Ansprüche 1 bis 4, **dadurch gekennzeichnet,**
**dass** das Auslöseelement mechanisch verriegelbar ausgeführt ist.

6. Vorrichtung nach einem der Ansprüche 1 bis 5, **dadurch gekennzeichnet,**
**dass** Individualdaten zumindest eines Bedieners in der Berechtigungseinheit speicherbar und von der Berechtigungseinheit an das Kraftfahrzeug übertragbar sind.

7. Vorrichtung nach Anspruch 2, **dadurch gekennzeichnet,**
**dass** Individualdaten zumindest eines Bedieners in der Berechtigungseinheit speicherbar und von der Berechtigungseinheit an die Auslöseeinheit übertragbar sind und
**dass** der mechanische Widerstand, gegen welchen die Betätigung des Auslöseelements erfolgt, abhängig von den Individualdaten anpassbar ist.

8. Vorrichtung nach Anspruch 1, **dadurch gekennzeichnet,**
**dass** Fahrzeugdaten von dem Kraftfahrzeug an die Berechtigungseinheit übertragbar sind und
**dass** das optische Anzeigeelement der Berechtigungseinheit während der Fahrzeugnutzung zur Anzeige der Fahrzeugdaten dient.

## Claims

1. A device for starting the engine of a motor vehicle with an authentication device, which comprises an authorisation unit, which can be carried by the user, and an authorisation checking device on the vehicle side with a receiver for the authorisation unit, and with a triggering unit, which comprises a triggering element, the activation of which can trigger a starting of the engine, the triggering element and the receiver being mechanically connected to one another in such a way that the triggering element can be actuated in that the authorisation unit brought into the receiver is displaced substantially in a translatory manner, **characterised in that** the authorisation unit has at least one optical display element which displays the readiness of the motor vehicle to trigger the starting of the engine and **in that** the device is configured in such a way that after the authorisation unit has been brought into its receiver, the readiness of the motor vehicle to trigger the start of the engine can be displayed by the display element.

2. A device according to claim 1, **characterised in that** the trigger element is actuated against a mechanical resistance.

3. A device according to either of claims 1 or 2, **characterised in that** the device has means for recognising the presence of the authorisation unit in the receiver.

4. A device according to any one of claims 1 to 3, **characterised in that** the triggering element can only be actuated if the authorisation unit is present in the receiver and optionally a corresponding authorisation check has been successfully completed.

5. A device according to any one of claims 1 to 4, **characterised in that** the triggering element can be mechanically locked.

6. A device according to any one of claims 1 to 5, **characterised in that** individual data of at least one operator can be stored in the authorisation unit and can be transmitted by the authorisation unit to the motor vehicle.

7. A device according to claim 2, **characterised in that** individual data of at least one operator can be stored in the authorisation unit and can be transmitted by the authorisation unit to the triggering unit and **in that** the mechanical resistance against which the triggering element is actuated can be adapted as a function of the individual data.

8. A device according to claim 1, **characterised in that** vehicle data can be transmitted from the vehicle to the authorisation unit and **in that** the optical display element of the authorisation unit is used to display the vehicle data when the vehicle is being used.

## Revendications

1. Dispositif pour démarrer un moteur d'un véhicule automobile avec un dispositif d'authentification qui comprend :
une unité d'authentification transportable par l'utilisateur et un dispositif de contrôle d'authentification embarqué, dans le véhicule et comprenant un logement pour l'unité d'authentification, ainsi qu'une unité de déclenchement avec un élément de déclenchement dont l'actionnement permet le démarrage du moteur, l'élément de déclenchement et le logement étant reliés entre eux mécaniquement de sorte que l'élément de déclenchement puisse être actionné, en déplaçant essentiellement par translation, l'unité d'authentification introduite dans son logement,
**caractérisé en ce que**
l'unité d'authentification présente au moins un élément d'affichage optique qui indique que le véhicule est prêt au déclenchement du démarrage du moteur et **en ce que** le dispositif est réalisé de sorte qu'après l'introduction du dispositif d'authentification dans son logement, l'élément d'affichage puisse indiquer que le véhicule est prêt au déclenchement du démarrage du moteur.

2. Dispositif selon la revendication 1,
**caractérisé en ce que**
l'actionnement de l'élément de déclenchement se fait à l'encontre d'une résistance mécanique.

3. Dispositif selon une des revendications 1 ou 2,
**caractérisé en ce que**
le dispositif présente des moyens pour la reconnaissance de la présence de l'unité d'authentification dans le logement.

4. Dispositif selon une des revendications 1 ou 3,
**caractérisé en ce que**
l'élément de déclenchement ne peut être actionné que lorsque l'unité d'authentification est présente dans son logement et le cas échéant un contrôle d'authentification a été effectué avec succès.

5. Dispositif selon une des revendications 1 à 4,
**caractérisé en ce que**
l'élément de déclenchement se verrouille mécaniquement.

6. Dispositif selon une des revendications 1 à 5,
**caractérisé en ce que**
des données individuelles d'au moins un utilisateur peuvent être mémorisées dans l'unité d'authentification et être transmises par l'unité d'authentification au véhicule.

7. Dispositif selon la revendication 2,
**caractérisé en ce que**
des données individuelles d'au moins un utilisateur peuvent être mémorisées dans l'unité d'authentification et être transmises par l'unité d'authentification à l'unité de déclenchement et que la résistance mécanique s'opposant à l'actionnement de l'élément de déclenchement dépendent des données individuelles.

8. Dispositif selon la revendication 1,
**caractérisé en ce que**
des données de véhicule peuvent être transmises par le véhicule automobile à l'unité d'authentification et que l'élément d'affichage optique de l'unité d'authentification sert à l'indication de donnée du véhicule pendant l'utilisation du véhicule.
